# EUROPÄISCHE PATENTSCHRIFT

(11) **EP 0 598 434 B1**
(45) Veröffentlichungstag und Bekanntmachung des Hinweises auf die Patenterteilung: **23.07.1997**
(21) Anmeldenummer: 93203117.2
(22) Anmeldetag: 08.11.1993
(51) Int. Cl.: G06K 15/02, G09G 5/24, G09G 5/28

(54) **Verfahren und Schaltungsanordnung zum Darstellen von Zeichen mit Umrandung**
Method and circuit arrangement for displaying characters with contour
Méthode et circuit pour l'affichage de caractères avec contour

(30) Priorität: 14.11.1992 DE 4238547
(43) Veröffentlichungstag der Anmeldung: 25.05.1994
(73) Patentinhaber: Philips Patentverwaltung GmbH, 22335 Hamburg (DE); Philips Electronics N.V., 5621 BA Eindhoven (NL)
(72) Erfinder: Plog, Jürgen, D-20097 Hamburg (DE)
(74) Vertreter: Poddig, Dieter, Dipl.-Ing.

(56) Entgegenhaltungen:
- EP-A- 0 393 756
- US-A- 4 186 393
- US-A- 4 827 254

## Beschreibung

Die Erfindung betrifft ein Verfahren zum Darstellen von Zeichen mit Umrandung auf einer Darstellungsanordnung als Raster aus Rasterzeilen und Rasterspalten, wobei die Informationen einem Speicher entnommen werden, und davon abgeleitete Signale spaltenweise verzögert und die verzögerten Signale miteinander kombiniert werden zur Bildung eines Umrandungssignals, dem eine das darzustellende Zeichen angebende Information überlagert wird, und eine Darstellungsanordnung zur Durchführung eines solchen Verfahrens für die Steuerung der Darstellung von Zeichen mit Umrandung in einem Raster aus Rasterzeilen und Rasterspalten sowie eine Schaltungsanordnung für eine solche Darstellungsanordnung.

Ein Verfahren der genannten Art bzw. eine dafür geeignete Darstellungsanordnung ist bekannt aus der US-PS 3,781,849 und dient dazu, Zeichen, die einem normalen Fernsehbild überlagert werden sollen, deutlicher darzustellen. Die Zeichen werden üblicherweise in einer vorgegebenen Helligkeit bzw. Farbe dargestellt. Wenn der Bildbereich, in dem ein Zeichen dargestellt werden soll, jedoch die gleiche Helligkeit bzw. Farbe hat, ist es nicht bzw. nur schwierig erkennbar. Um diese Erkennbarkeit zu verbessern, wird daher jedes Zeichen mit einer Umrandung versehen, die auch als Schattierung bezeichnet wird und die einen anderen Helligkeitswert bzw. eine andere Farbe hat, so daß entweder das Zeichen oder die Umrandung auch bei zufälliger Helligkeit oder Farbe des Hintergrunds zuverlässig erkennbar ist. Um dies zu erreichen, wird bei dem bekannten Verfahren in einem Zeichenspeicher zusätzlich zu der Zeicheninformation eine zusätzliche Steuerinformation gespeichert, wobei die Zeicheninformation selbst bereits besonders an die Darstellung mit Umrandung angepaßt ist. Die Zeicheninformation der Spalten jeweils einer Zeile des Zeichens wird um eine und um zwei Spalten verzögert und mit der unverzögerten Information kombiniert, um ein Ausblendsignal zu erzeugen. Das um eine Spalte verzögerte Signal wird ferner unter Verwendung der zusätzlich gespeicherten Steuerinformation benutzt, um die Darstellung des Zeichens selbst zu steuern. Hierdurch ist eine Umrandung jedes Zeichens mit einer vorgegebenen Breite von einer Spalte und einer Zeile vorgegeben, wobei letztere durch die gespeicherte Zeicheninformation bestimmt ist. Dadurch ist es nicht möglich, mit dem bekannten Verfahren bzw. der bekannten Anordnung Zeichen wahlweise sowohl ohne Umrandung als auch mit Umrandung bzw. Schattierung an wählbaren Seiten mit wählbarer Breite darzustellen.

Aus der US-PS 4.186.393 ist ein Verfahren zum Erzeugen von Umrandungen von Zeichen bekannt, bei dem die Information einer ganzen Bildzeile um eine und um zwei Bildzeilen verzögert wird, wofür entsprechend lange Schieberegister verwendet werden. Die unverzögerte und die verzögerte Information wird je einem weiteren Schieberegister zugeführt, aus deren Ausgängen über Gatter, die über Auswahlsignale gesteuert werden, die Information für die Umrandungen wählbar abgeleitet wird. Dieses Verfahren ist durch die Notwendigkeit langer Schieberegister aufwendig.

Aufgabe der Erfindung ist es daher, ein Verfahren der eingangs genannten Art anzugeben, mit dem beliebige darzustellende Zeichen mit möglichst wenig Aufwand mit einer Umrandung an beliebig wählbaren Seiten dargestellt werden können.

Diese Aufgabe wird erfindungsgemäß dadurch gelöst, daß zur Erzeugung der Umrandung (Schattierung) an wählbaren Seiten des Zeichens synchron mit den dargestellten Rasterpunkten ein Zeilensignal gebildet wird, indem für jede darzustellende Rasterzeile die Informationen dieser Rasterzeile mit den Informationen einer ersten Anzahl vorhergehender und/oder nachfolgender, im wesentlichen gleichzeitig zugeführter Rasterzeilen des Zeichens gemäß den gewählten Seiten der Umrandung spaltenweise getrennt verknüpft werden, daß das Zeilensignal spaltenweise um bis zu einer doppelten zweiten Anzahl Spalten verzögert wird, wobei die erste Anzahl die Höhe der Umrandung in Rasterzeilen und die zweite Anzahl die Breite der Umrandung in Rasterspalten angibt, daß ferner ein Zeichensignal gebildet wird, indem die Informationen der darzustellenden Rasterzeile des Zeichens um die zweite Anzahl Spalten verzögert werden, und daß ein Schattierungssignal aus der Kombination von unterschiedlich verzögerten Zeilensignalen entsprechend den gewählten Seiten für die Umrandung, wobei aus dieser Kombination das Zeichensignal ausgeblendet wird, gebildet wird und durch das Schattierungssignal an entsprechenden Rasterpunkten der dargestellten Rasterzeile eine vorgebbare Farbe erzeugt wird.

Kerngedanke der Erfindung ist es also, die Information für nur ein Zeichen zur Zeit zu verarbeiten und lange Schieberegister für die Verzögerung einer ganzen Bildzeile zu vermeiden, indem mehrere Rasterzeilen jedes einzelnen Zeichens praktisch gleichzeitig zugeführt und zu einem Zeilensignal verknüpft werden. Dabei wird zunächst die Information für einen oberen oder unteren Rand erzeugt, und daraus wird dann zusätzlich die Information für einen linken oder rechten Rand gebildet. Der Einfachheit halber wird die Umrandungsinformation auch für den Rasterpunkt, der zu der Information des darzustellenden Basiszeichens gehört, gebildet und danach erst durch diese Zeicheninformation wieder unterdrückt. Dies ergibt ein einfach zu realisierendes Verfahren für eine wählbare Umrandung von Zeichen, das auch verwendbar ist, wenn die Zeicheninformation beispielsweise für einen Bildteil oder ein ganzes Bild pixelweise gespeichert ist.

Häufig besteht die Möglichkeit, vorgegebene Zeichen in verschiedener Größe, beispielsweise in doppelter Höhe, doppelter Breite oder insgesamt doppelter Größe, darzustellen. Für einen besseren Bildeindruck ist es dann zweckmäßig, solche Zeichen mit einer breiteren Umrandung als die Zeichen mit normaler Größe darzustellen. Eine Ausgestaltung des erfindungsgemäßen Verfahrens ist daher dadurch gekennzeichnet, daß zum Wählen verschiedener Breiten der Umrandung die erste Anzahl der gewählten Umrandungsbreite und die zweite Anzahl der maximalen Umrandungsbreite entspricht und daß die mittleren verzögerten Zeilensignale entsprechend der gewählten Umrandungsbreite und der gewählten Seite für die Umrandung zur Bildung des Schattierungssignals kombiniert werden. Damit ist es auch möglich, die Umrandungsbreite innerhalb einer Zeile von Zeichen oder auch innerhalb einer Rasterzeile zu ändern.

Es sei bemerkt, daß für eine Umrandung die Anzahl Zeilen für den oberen bzw. unteren Rand unterschiedlich von der Anzahl Rasterpunkte für die seitlichen Ränder sein kann, d.h. die erste und die zweite Anzahl ist unterschiedlich.

Eine Darstellungsanordnung zur Durchführung des erfindungsgemäßen Verfahrens für die Steuerung der Darstellung von Zeichen in einem Raster aus Rasterzeilen und Rasterspalten, mit einer Datenquelle zum Liefern der Information der Zeichen synchron mit den dargestellten Rasterpunkten mit einer ersten Verzögerungsanordnung zum Verzögern von aus der gelieferten Information der Zeichen abgeleiteten Signalen und mit einer Kombinieranordnung zum Kombinieren von unterschiedlich verzögerten Signalen, ist dadurch gekennzeichnet, daß zur Darstellung von Zeichen mit einer Umrandung (Schattierung) an wählbaren Seiten der Zeichen folgende Elemente vorgesehen sind:
a) eine Steueranordnung (10), die für jede darzustellende Rasterzeile eines Zeichens zusätzlich die Informationen einer der Umrandungsbreite entsprechenden ersten Anzahl vorhergehender und/oder folgender Rasterzeilen des Zeichens gemäß den gewählten Seiten für die Umrandung aus der Datenquelle (12) ausliest,
b) eine Verknüpfungsanordnung (16; 42, 44), die die Informationen gleicher Spalten der einzelnen ausgelesenen Rasterzeilen des Zeichens zu einem Zeilensignal verknüpft, wobei die erste Verzögerungsanordnung (52, 54, 56, 58) das Zeilensignal bis zu einer doppelten zweiten, der Umrandungsbreite entsprechenden Anzahl Spalten verzögert und spaltenweise verzögert abgibt und die Kombinieranordnung (61 bis 67) die spaltenweise verzögerten Zeilensignale entsprechend den gewählten Seiten der Umrandung kombiniert,
c) eine zweite Verzögerungsanordnung (22), die die Informationen der momentan darzustellenden Rasterzeile um die zweite Anzahl Spalten verzögert als Zeichensignal abgibt,
d) eine Ausblendanordnung (72, 74), die die kombinierten verzögerten Zeilensignale bei Auftreten eines Zeichensignals unterdrückt und das nicht unterdrückte Signal als Schattierungssignal der Darstellungsanordnung (28) zur Erzeugung einer vorgebbaren Farbe an den entsprechenden Rasterpunkten zuführt.

Abgesehen von der Steueranordnung sind die übrigen Anordnungen sehr einfach aufgebaut, da im wesentlichen nur ein einziges bitserielles Signal zu verarbeiten ist. Für die Einblendung von Zeichen in beispielsweise ein Fernsehbild ist ohnehin eine Steueranordnung erforderlich, die als ein Mikroprozessor ausgebildet sein kann, ggf. mit besonderen angepaßten Abwandlungen, so daß diese Steueranordnung leicht auch für die Steuerung der Umrandung, insbesondere für das Auslesen der einzelnen Rasterzeilen, verwendet werden kann, ggf. ergänzt um einen Zähler für das Abzählen der auszulesenden Rasterzeilen.

Eine Ausgestaltung der erfindungsgemäßen Darstellungsanordnung ist dadurch gekennzeichnet, daß zum Darstellen der Umrandung mit wählbarer Breite die erste Anzahl der gewählten Umrandungsbreite und die zweite Anzahl der maximalen Umrandungsbreite entspricht und daß die Kombinieranordnung gemäß der gewählten Umrandungsbreite ausgewählte spaltenweise verzögerte Zeilensignale kombiniert. Auf diese Weise ist die Breite der Umrandung, beispielsweise für Zeichen mit unterschiedlicher Größe, leicht steuerbar.

Die wesentlichen Teile der erfindungsgemäßen Darstellungsanordnung arbeiten mit einer Taktfrequenz, die der Frequenz der Rasterpunkte auf der Darstellungsanordnung entspricht, beispielsweise mit 12 MHz, was mit üblichen digitalen Schaltungstechniken für Gatter und Flipflops kein Problem darstellt. Lediglich der Zugriff auf die Datenquelle, die beispielsweise durch einen Zeichenspeicher dargestellt wird und aus dem dann innerhalb einer durch diese Frequenz gegebenen Periode mehrere Zeilen einer Spalte ausgelesen werden müssen, ist für derzeit verfügbare Speicher kaum möglich. Es ist daher üblich, bereits für die Darstellung der Zeichen selbst ohne Umrandung jeweils eine dritte Anzahl Rasterspalten einer Rasterzeile parallel aus dem Zeichenspeicher auszulesen, wobei diese parallele Information dann durch einen Parallel-Serien-Wandler in eine serielle Information umgewandelt wird. Dadurch verringert sich die Häufigkeit der Speicherzugriffe im Verhältnis der dritten Anzahl parallel ausgelesenen Rasterspalten. Hierfür ist eine zweckmäßige Ausgestaltung der erfindungsgemäßen Darstellungsanordnung dadurch gekennzeichnet, daß die Verknüpfungsanordnung die dritte Anzahl Speicherregister mit je einem vorgeschalteten ODER-Gatter enthält, wobei ein erster Eingang jedes ODER-Gatters mit dem Ausgang des zugehörigen Speicherregisters und ein zweiter Ausgang jedes ODER-Gatters mit einem Eingang für eine der parallelen Informationen der Rasterspalten gekoppelt ist, und daß die Ausgänge der Speicherregister mit einem Parallel-Serien-Wandler verbunden sind, dessen Serienausgang mit der zweiten Verzögerungsanordnung verbunden ist. Da der wesentliche Aufwand der erfindungsgemäßen Darstellungsanordnung in den als Flipflop ausgebildeten Speicherelementen enthalten ist, wird nun ein merklicher Aufwand eingespart, indem für die Zwischenspeicherung der beispielsweise aus dem Zeichenspeicher ausgelesenen mehreren Rasterzeilen nur Speicherregister für eine einzige Rasterzeile benötigt wird.

Ausführungsbeispiele der Erfindung werden nachstehend anhand der Zeichnung näher erläutert. Es zeigen:
Fig. 1a und 1b zwei Beispiele für die Umrandung eines Zeichens,
Fig. 2a und 2b schematisch den schrittweisen Aufbau der Umrandungsinformation,
Fig. 3 ein schematisches Blockschaltbild einer erfindungsgemäßen Schaltungsanordnung,
Fig. 4 und Fig. 5 den Aufbau einiger Blöcke mehr im Detail.

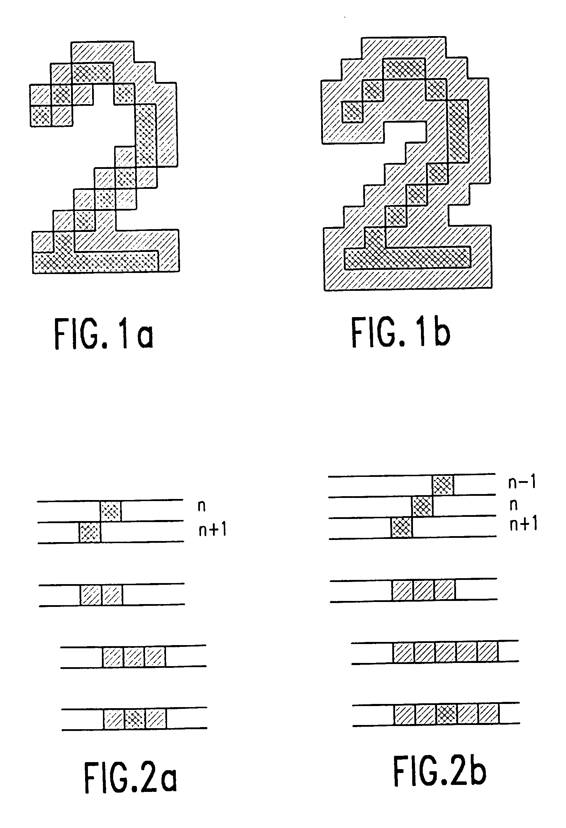

Die Fig. 1a zeigt die Ziffer "2" in einer rasterförmigen Darstellung, wobei die Rasterpunkte kreuzschraffiert sind. Dieses Zeichen ist mit einer Umrandung an der oberen und an der rechten Seite versehen, die hier ebenfalls einen Rasterpunkt breit ist. Dies bedeutet, daß jeder Rasterpunkt über und rechts von einem Bildpunkt sowie diagonal rechts oberhalb eines Bildpunktes einen Randpunkt darstellt. Bei einer farbigen Darstellung haben die Bildpunkte und die Umrandungspunkte eine unterschiedliche Farbe, bei einer einfarbigen Darstellung unterschiedliche Helligkeitswerte. In praktischen Fällen werden Zeichen oft mit einer größeren Anzahl Punkte, d.h. mit einer größeren Auflösung dargestellt, und die Umrandung auch für Zeichen einfacher Breite kann mehr als einen Rasterpunkt breit sein.

Bei der in Fig. 1b dargestellten Ziffer "2" sind alle vier Seiten mit einem Rand versehen, und außerdem gehört jeder Rasterpunkt, der diagonal zu einem Zeichenpunkt liegt, zur Umrandung, wenn dieser Punkt nicht selbst ein Zeichenpunkt ist.

Die Erzeugung einer Umrandung gemäß Fig. 1a soll anhand der Fig. 2a näher erläutert werden. Darin sind in der obersten Zeile zwei Rasterzeilen eines Zeichens bzw. eines Zeichenausschnitts angegeben, wobei in der oberen Zeile n, die die darzustellende Rasterzeile angibt, ein Zeichenpunkt und in der nachfolgenden Rasterzeile n+1 ebenfalls ein Zeichenpunkt angegeben ist, jedoch diagonal versetzt.

In der folgenden Zeile in Fig. 2a ist die Verknüpfung dieser beiden Zeichenpunkte angegeben, und zwar eine ODER-Verknüpfung bezüglich der Zeicheninformation. Diese Information wird nachfolgend als Zeilensignal bezeichnet.

In der dritten Zeile der Fig. 2a ist die Kombination des Zeilensignals mit dem um zwei Rasterpunkte entsprechend der doppelten Umrandungsbreite sowie mit dem um einen Rasterpunkt verzögerten Zeilensignal angegeben. Das unverzögerte Zeilensignal ist nicht darin enthalten, weil auf der linken Seite des Zeichens keine Umrandung dargestellt werden soll. Dieses kombinierte Signal ist bereits im wesentlichen das Umrandungssignal für eine Umrandung, wie in Fig. 1a dargestellt, wobei dieses Umrandungssignal jedoch auch an der Stelle der eigentlichen Zeicheninformation vorhanden ist.

In der letzten Zeile in Fig. 2a ist nun der Rasterpunkt, an dem die um einen Rasterpunkt entsprechend der einfachen Umrandungsbreite verzögerte Zeicheninformation der obersten Zeile n vorhanden ist, aus dem kombinierten Signal ausgeblendet und durch diese Zeicheninformation ersetzt. Dies stellt nun die Information dar, die der Darstellungsanordnung zugeführt wird, wie bei der Ziffer in Fig. 1a in dem mittleren schrägen Teil zu erkennen ist.

In Fig. 2b sind die entsprechenden Verhältnisse für eine vollständige Umrandung an allen vier Seiten gemäß Fig. 1b angedeutet. Hier wird also für jede darzustellende Zeile n die vorhergehende Rasterzeile n-1 und die folgende Rasterzeile n+1 zugeführt. Die folgende Zeile in Fig. 2b zeigt dann wieder das Zeilensignal als Verknüpfung aller drei Zeicheninformationen.

Die dritte Zeile in Fig. 2b zeigt die Kombination des um zwei Rasterpunkte und des um einen Rasterpunkt verzögerten Zeilensignals mit dem unverzögerten Zeilensignal, weil hier nun die linke und die rechte Seite des Zeichens mit einer Umrandungsinformation versehen werden soll. In der letzten Zeile in Fig. 2b ist schließlich der mittlere Rasterpunkt durch die um einen Rasterpunkt verzögerte Zeileninformation der Zeile n ersetzt.

Auf diese Weise werden die gewählten Seiten der Zeichen mit Umrandungsinformation unmittelbar während des Zuführens zur Darstellungsanordnung erzeugt, so daß nur die Zeicheninformation selbst ohne Umrandung gespeichert sein muß. Dieses Verfahren zur Erzeugung der Umrandung ist sehr flexibel, da gewünschte Umrandungen durch die Steuerung des Auslesens der jeweils vorhergehenden und/oder folgenden Rasterzeile und durch Kombination mit entsprechend verzögerten und unverzögerten Signalen gebildet werden kann. Dies gilt im übrigen auch für den oberen bzw. unteren Rand eines Zeichens, wie leicht zu erkennen ist, denn beispielsweise bei der Darstellung der Zeile unmittelbar oberhalb eines Zeichens, an der ein Rand dargestellt werden soll, enthalten die Rasterzeilen n-1 und n keine Zeicheninformation, so daß die Verknüpfung zum Zeilensignal nur die Information der Rasterzeile n+1, d.h. der obersten Zeile des darzustellenden Zeichens, enthält.

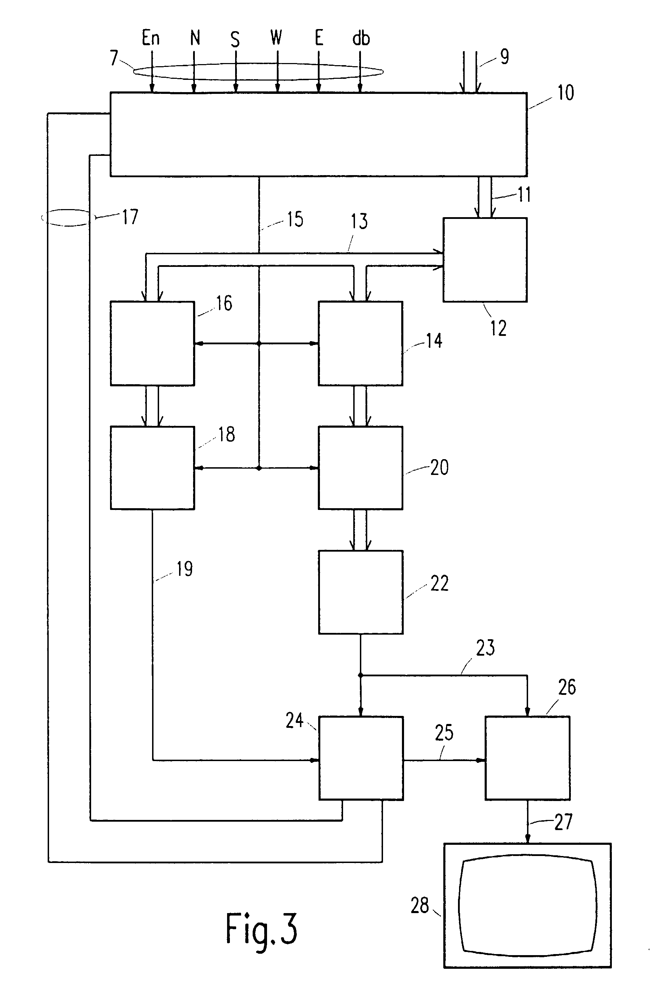

Eine Schaltungsanordnung zur Erzeugung der Umrandungsinformation gemäß dem beschriebenen Verfahren ist in Fig. 3 dargestellt. Eine Steueranordnung 10, die als Mikroprozessor ausgeführt sein kann und noch weitere Funktionen ausführen kann, empfängt eine Anzahl Steuersignale, die für die Erzeugung der Umrandungsinformation erforderlich sind. In dem Leitungsbündel 7 ist zunächst eine Leitung En enthalten, die angibt, ob die Erzeugung der Umrandungsinformation freigegeben werden soll. Damit kann also ausgewählt werden, ob einzelne Zeichen mit Umrandung und andere Zeichen in demselben Bild ohne Umrandung dargestellt werden sollen. Die nächsten vier Leitungen N, S, W und E geben an, welche Seite des Zeichens mit einem Rand dargestellt werden soll, wobei die Bezeichnungen der Leitungen von den Himmelsrichtungen gemäß der üblichen Landkartendarstellung abgeleitet sind. N bedeutet daher "Nord" und gibt an, daß der obere Rand jedes Zeichenelements mit einem Rand versehen werden soll, usw. Die Leitung db gibt, daß eine Umrandung in doppelter Breite dargestellt werden soll. Dies ist insbesondere für solche Zeichen zweckmäßig, die wenigstens in einer Richtung vergrößert dargestellt werden sollen. Über die Mehrfachleitung 9 wird parallel die Adresse der aktuellen Zeile auf der Darstellungsanordnung zugeführt, aus der sich ergibt, welche Zeichenzeile aus einem Zeichengenerator ausgelesen werden muß. Die weitere Steuerung des Zeichengenerators, nämlich durch das Zeichen selbst, ist hier nicht näher angegeben, da dies allgemein bekannt ist und nicht zur Erfindung gehört. Ebenso sind weitere Steuersignale, insbesondere Taktsignal, der Übersichtlichkeit halber nicht näher dargestellt.

Die Steueranordnung 10 erzeugt nun aus den zugeführten Signalen eine Anzahl weiterer Steuersignale, die auf den Verbindungen 15 und 17 abgegeben werden und die später näher erläutert werden. Ferner erzeugt die Steueranordnung 10 parallel an einem Ausgang 11 die Adressen der Rasterzeilen, die aus einer die Zeicheninformation enthaltenden Datenquelle 12 ausgelesen werden sollen, beispielsweise mit Hilfe eines nicht dargestellten Zählers, der auf eine entsprechend der Umrandungsbreite verringerte Adresse der aktuellen Rasterzeile gesetzt wird und dann weiterzählt und bei jeder Stellung eine Rasterzeile aus der Datenquelle 12 ausliest. Der Einfachheit halber wird im folgenden angenommen, daß die Datenquelle 12 ein üblicher Zeichengenerator ist, der die Zeicheninformation in Form von Rasterzeilen und Rasterspalten enthält, wobei jeweils eine ganze Rasterzeile eines Zeichens ausgelesen und an einem Ausgang 13 abgegeben wird.

Die parallele Information der Rasterzeile wird über die Verbindung 13 zwei Anordnungen 14 und 16 zugeführt. Die Anordnung 14 ist ein Register, das die Zeicheninformation der aktuellen Darstellungszeile aufnimmt, und zwar durch ein entsprechendes Steuersignal über die Verbindung 15 von der Steueranordnung 10, das erzeugt wird, wenn die entsprechende Rasterzeile aus dem Zeichengenerator 12 ausgelesen wird. Die Anordnung 16 enthält eine als Nord-Süd-Logik bezeichnete Schaltung, die dafür sorgt, daß die Zeicheninformationen der für jede Darstellungszeile nacheinander zugeführten Rasterzeilen spaltenweise ODER-mäßig verknüpft werden. Dies geschieht ebenfalls unter Steuerung von Steuersignalen über die Verbindung 15. Dabei kann die Auswahl derjenigen Rasterzeilen, die zusätzlich zu der unmittelbar darzustellenden Rasterzeile ausgelesen und zugeführt werden, dadurch erfolgen, daß über die Verbindung 15 abhängig von den Signalen auf den Leitungen N und S sowie db nur die entsprechenden der zugeführten Rasterzeilen übernommen werden, wobei stets die maximale Anzahl Rasterzeilen für die breiteste Umrandung ausgelesen werden, oder die Steueranordnung erzeugt abhängig von den Signalen auf den genannten Leitungen nur die entsprechenden Adressen am Ausgang 11.

Die in dem Register 14 enthaltene Zeicheninformation der darzustellenden Rasterzeile des Zeichens und die in der Anordnung 16 enthaltene verknüpfte Zeicheninformation wird nun einem Serien-Parallel-Wandler 18 bzw. 20 zugeführt und dort mit einem entsprechenden Signal über die Verbindung 15 eingeschrieben. Dies erfolgt jeweils dann, wenn die Verarbeitung der entsprechenden Rasterzeile des vorhergehenden Zeichens abgeschlossen ist. Die Parallel-Serien-Wandler 18 und 20 geben die Information anschließend mit dem Takt der Darstellung der einzelnen Rasterpunkte auf einer Darstellungsanordnung 28 ab.

Die serielle Information des Wandlers 20 wird einer Verzögerungsanordnung 22 zugeführt, wo diese Information um eine Anzahl Takte entsprechend der maximalen Breite der seitlichen Umrandung verzögert wird. Das verzögerte Signal wird über die Leitung 23 abgegeben, und zwar u.a. an eine Anordnung 24, die als Ost-West-Logik bezeichnet wird, weil damit die linken und rechten Umrandungen erzeugt werden. Die Auswahl der Seite der Umrandung und deren Breite erfolgt über die Steuersignale auf den Leitungen 17 von der Steueranordnung 10. Diese Ost-West-Logik 24 enthält insbesondere eine Verzögerungsanordnung, die die über die Leitung 19 ausgegebene serielle Information des Wandlers 18 um die doppelte maximale Breite der Ost-West-Umrandung verzögert und die verzögerten Signale entsprechend den Steuersignalen auf der Verbindung 17 kombiniert. Aus dem kombinierten Signal wird die über die Leitung 23 zugeführte Zeicheninformation ausgeblendet. Das resultierende Signal ist dann die Umrandungsinformation, die über die Leitung 25 einer Anordnung 26 zugeführt wird. Diese enthält ferner die verzögerte Zeicheninformation über die Leitung 23.

In der Anordnung 26 werden aus den Signalen auf den Leitungen 23 und 25 die entsprechenden Farbinformationen für die Darstellungsanordnung 28 erzeugt, die zusammengesetzt auf der Leitung 27 erscheinen. Zusätzlich kann in der Anordnung 26 diese Farbinformation einem Farbbildsignal, das von einer nicht dargestellten Quelle wie z.B. einer Empfangsvorrichtung für Farbfernsehsignale stammt, überlagert werden.

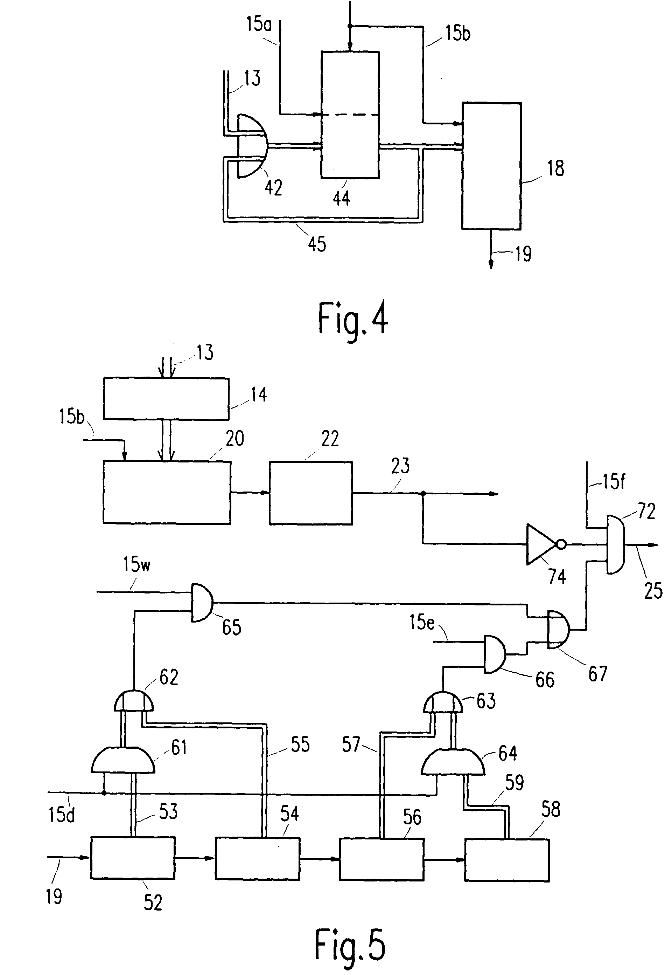

In Fig. 4 ist der Aufbau der Anordnung 16 näher dargestellt. Wie bereits beschrieben, enthält die Verbindung 13 eine Anzahl Leitungen, und jede Leitung ist einer Spalte eines Zeichens bzw. Zeichenfeldes zugeordnet, so daß die Information einer Rasterzeile eines Zeichens parallel zugeführt wird. Jede Leitung der Verbindung 13 ist mit einem Eingang eines eigenen ODER-Gatters 42 verbunden, die in Fig. 4 vereinfacht als nur ein Gatter dargestellt sind. Der Ausgang jedes ODER-Gatters 42 führt auf den Dateneingang einer eigenen Registerstufe 44, die hier ebenfalls als eine einzige Stufe dargestellt ist. Der Ausgang 45 jeder Registerstufe ist mit einem zweiten Eingang des zugehörigen ODER-Gatters 42 verbunden, und die Ausgänge aller Register sind mit einem parallelen Eingang des Parallel-Serien-Wandlers 18 verbunden. Wenn beispielsweise angenommen wird, daß eine Rasterzeile eines Zeichens 12 Rasterpunkte enthält, sind also 12 ODER-Gatter 42 und 12 Registerstufen 44 vorhanden, und der Parallel-Serien-Wandler 18 wandelt ein 12 Bit breites Wort in einen seriellen Datenstrom um.

Die Information jeder der nacheinander zugeführten Rasterzeilen wird also über die ODER-Gatter mit dem vorherigen Inhalt der zugehörigen Registerstufe 44 ODER-mäßig verknüpft und in die zugehörige Registerstufe mit einem Signal auf der Leitung 15a wieder eingeschrieben. Die Leitung 15a ist ein Teil der Verbindung 15 in Fig. 3 und erhält für die Information jeder Rasterzeile, die tatsächlich verwendet werden soll, ein Signal. Auf diese Weise kann beispielsweise auch für den Fall, daß über die Verbindung 13 die Information der maximalen Anzahl Rasterzeilen für die breiteste Umrandung zugeführt wird, die Information der Rasterzeilen für die gewünschte Umrandung ausgewählt werden.

Wenn alle Rasterzeilen für die Umrandung zugeführt worden sind, enthält jede Registerstufe 44 die Verknüpfung einer Spalte aus allen Rasterzeilen. Wenn die Information der Rasterzeile des vorhergehenden Zeichens vollständig verarbeitet ist, d.h. vollständig aus dem Parallel-Serien-Wandler 18 über den seriellen Ausgang 19 ausgegeben worden ist, erscheint ein Signal auf der Leitung 15b, das die Information aller Rasterstufen 44 in den Parallel-Serien-Wandler 18 übernimmt und gleichzeitig alle Registerstufen. löscht. Anschließend wird diese übernommene Information wieder aus dem Parallel-Serien-Wandler 18 über die Leitung 19 seriell ausgegeben.

Der Aufbau der Ost-West-Logik 24 ist in Fig. 5 näher dargestellt. Die über die Leitung 19 eintreffende Zeileninformation wird einer Kette von Verzögerungsanordnungen 52, 54, 56 und 58 zugeführt, in denen diese Information im Takt der Rasterpunkte der Darstellungsanordnung durchgeschoben wird. Die Summe der Verzögerungen der Anordnungen 52 und 54 ist gleich der Summe der Verzögerungen der Anordnungen 56 und 58, die der breitesten Umrandung, die mit doppelter Breite angenommen wird, entspricht. Die Verzögerung der Anordnungen 54 und 56 entsprechen je der einfachen Breite der Umrandung.

Jede Verzögerungsanordnung enthält also eine Anzahl Verzögerungsstufen entsprechend der Anzahl Spalten, um die diese Anordnung das Zeilensignal verzögert. Die Ausgänge aller Verzögerungsstufen einer Anordnung werden parallel herausgeführt, und zwar bei der Anordnung 52 über die Verbindung 53. Jede Leitung dieser Verbindung führt auf den einen Eingang eines eigenen UND-Gatters 61, und ein weiterer Eingang aller UND-Gatter 61 ist mit einer Steuerleitung 15d verbunden, die angibt, ob die Umrandung einfach oder doppelt dargestellt werden soll. Der Ausgang jedes UND-Gatters 61 führt auf einen Eingang eines ODER-Gatters 62. Die parallel über die Verbindung 55 herausgeführten Verzögerungsstufen der Anordnung 54 führen direkt auf je einen Eingang des ODER-Gatters 62. Der Ausgang dieses Gatters führt auf einen Eingang eines UND-Gatters 65, dessen anderer Eingang mit einer Steuerleitung 15w verbunden ist, die ebenfalls zu der Verbindung 15 in Fig. 3 gehört.

In entsprechender Weise führen die Ausgänge der Verzögerungsstufen in der Verzögerungsanordnung 58 über die Verbindung 59 auf einen Eingang je eines UND-Gatters 64, deren anderer Eingang ebenfalls mit der Steuerleitung 15d verbunden ist. Die Ausgänge der UND-Gatter 64 führen auf je einen Eingang eines ODER-Gatters 63, dessen andere Eingänge direkt über die Verbindung 57 mit den Ausgängen der einzelnen Verzögerungsstufen der Anordnung 56 verbunden sind. Der Ausgang des ODER-Gatters 63 führt auf einen Eingang eines UND-Gatters 66, dessen anderer Eingang mit einer Steuerleitung 15e verbunden ist, die ebenfalls zu der Verbindung 15 in Fig. 3 gehört. Die Ausgänge der UND-Gatter 65 und 66 führen auf je einen Eingang eines ODER-Gatters 67, dessen Ausgang somit ein Signal führt, wie es in Fig. 2a bzw. 2b in der zweiten Zeile von unten dargestellt ist.

In dem oberen Teil der Fig. 5 ist zusätzlich der Teil zur Erzeugung des Zeichensignals aus der Fig. 3 etwas ausführlicher dargestellt. Im Register 14 wird die Information der über den Eingang 13 zugeführten darzustellenden Rasterzeile des Zeichens zugeführt und gespeichert. Mit dem gleichen Signal auf der Leitung 15b, mit dem in Fig. 4 die Information der Registerstufen 44 in den Parallel-Serien-Wandler 18 übernommen wird, wird nun auch der Inhalt des Registers 14 in einen Parallel-Serien-Wandler 20 übernommen und anschließend seriell ausgelesen. Diese serielle Information führt auf die Verzögerungs22, die das Signal um eine Anzahl Rasterpunkte, die gleich der Summe der Verzögerungen in den Verzögerungsanordnungen 52 und 54 ist, verzögert als Zeichensignal auf der Leitung 23 abgibt. Dieses Zeichensignal wird über einen Inverter 74 einem Eingang eines UND-Gatters 72 zugeführt, das am anderen Eingang das Ausgangssignal des ODER-Gatters 67 erhält. Wenn zunächst angenommen wird, daß das Signal auf der Leitung 15f das UND-Gatter 72 freigibt, erscheint auf der Leitung 25 das Umrandungssignal. Mit dem Signal auf der Leitung 15f, die ebenfalls zu der Verbindung 15 in Fig. 3 gehört, kann gesteuert werden, daß beispielsweise bei einigen Zeichen eine Umrandung dargestellt wird und bei anderen Zeichen dies Umrandungssignal unterdrückt wird.

Dadurch, daß die Verzögerungszeit der Verzögerungsanordnung 22 gleich der Summe der Verzögerungszeiten der Anordnungen 52 und 54 ist, entsteht an den Ausgängen 55 ein Umrandungssignal, das der eigentlichen Zeicheninformation um ein oder mehrere Rasterpunkte voreilt. Durch die Zusammenfassung dieser Ausgänge im ODER-Gatter 62 entsteht an dessen Ausgang eine Kette von Rasterpunktsignalen, die dem Zeichensignal voreilen, und wenn das Signal auf der Leitung 15w das UND-Gatter 65 freigibt, wird damit über das ODER-Gatter 67 das Umrandungssignal für die linke Seite erzeugt. Entsprechend entstehen an den Ausgängen 57 der Verzögerungsanordnung 56 Umrandungssignale, die dem Zeichensignal nacheilen, und wenn das Signal auf der Leitung 15e das UND-Gatter 66 freigibt, wird die Kette von nacheilenden Rasterpunktsignalen über das ODER-Gatter 67 als Umrandungssignal für die rechte Seite am Ausgang 25 erzeugt. Wenn beide Leitungen 15e und 15w ein hohes Signal führen, wird eine Umrandung an beiden Seiten eines Zeichenpunktes erzeugt.

Durch ein hohes Signal auf der Leitung 15d werden die UND-Gatter 61 und 64 freigegeben, von denen jedes tatsächlich aus einer der Anzahl Leitungen in den Verbindungen 53 bzw. 59 entsprechenden Anzahl von einzelnen Gattern besteht, und am Ausgang der ODER-Gatter 62 und 63 entsteht dann eine entsprechend längere Kette von voreilenden bzw. nacheilenden Rasterpunktsignalen, die eine entsprechend breitere Umrandung in der Darstellung erzeugt. Mit dem Signal auf der Leitung 15d kann also die Breite der Umrandung bestimmt werden. Die Steuerleitung 15d kann auch für die beiden Gruppen von UND-Gattern 61 und 64 getrennt geführt werden, so daß die Breite der Umrandung innerhalb eines Zeichens umgeschaltet werden kann, beispielsweise bei einem Übergang der Darstellung von einfacher auf doppelte Breite.

Mit der beschriebenen Schaltungsanordnung ist also eine flexible Darstellung von Umrandungen von Zeichen darstellbar, ohne daß die eigentliche Zeicheninformation verändert werden muß, beispielsweise ohne daß die Zeichen mit einer Umrandungsinformation gesondert gespeichert sein müßten.

## Patentansprüche

1. Verfahren zum Darstellen von Zeichen mit Umrandung auf einer Darstellungsanordnung als Raster aus Rasterzeilen und Rasterspalten, wobei die Informationen der Zeichen einem Speicher entnommen werden und davon abgeleitete Signale spaltenweise verzögert und die verzögerten Signale miteinander kombiniert werden zur Bildung eines Umrandungssignals, dem eine das darzustellende Zeichen angebende Information überlagert wird,
**dadurch gekennzeichnet**, daß zur Erzeugung der Umrandung d.h. Schattierung an wählbaren Seiten des Zeichens synchron mit den dargestellten Rasterpunkten ein Zeilensignal gebildet wird, indem für jede darzustellende Rasterzeile die Informationen dieser Rasterzeile mit den Informationen einer ersten Anzahl vorhergehender und/oder nachfolgender, Rasterzeilen des Zeichens gemäß den gewählten Seiten der Umrandung spaltenweise getrennt verknüpft werden, daß das Zeilensignal spaltenweise um bis zu einer doppelten zweiten Anzahl Spalten verzögert wird, wobei die erste Anzahl die Höhe der Umrandung in Rasterzeilen und die zweite Anzahl die Breite der Umrandung in Rasterspalten angibt, daß ferner ein Zeichensignal gebildet wird, indem die Informationen der darzustellenden Rasterzeile des Zeichens um die zweite Anzahl Spalten verzögert werden, und daß ein Schattierungssignal aus der Kombination von unterschiedlich verzögerten Zeilensignalen entsprechend den gewählten Seiten für die Umrandung, wobei aus dieser Kombination das Zeichensignal ausgeblendet wird, gebildet wird und durch das Schattierungssignal an entsprechenden Rasterpunkten der dargestellten Rasterzeile eine vorgebbare Farbe erzeugt wird.

2. Verfahren nach Anspruch 1
**dadurch gekennzeichnet**, daß zum Wählen verschiedener Breiten der Umrandung die erste Anzahl der gewählten Umrandungsbreite und die zweite Anzahl der maximalen Umrandungsbreite entspricht und daß die mittleren verzögerten Zeilensignale entsprechend der gewählten Umrandungsbreite und der gewählten Seite für die Umrandung zur Bildung des Schattierungssignals kombiniert werden.

3. Darstellungsanordnung zur Durchführung des Verfahrens nach einem der Ansprüche 1 oder 2 für die Steuerung der Darstellung von Zeichen in einem Raster aus Rasterzeilen und Rasterspalten, mit einer Datenquelle zum Liefern der Information der Zeichen synchron mit den dargestellten Rasterpunkten, mit einer ersten Verzögerungsanordnung zum Verzögern von aus der gelieferten Information der Zeichen abgeleiteten Signalen und mit einer Kombinieranordnung zum Kombinieren von unterschiedlich verzögerten Signalen,
**dadurch gekennzeichnet**, daß zur Darstellung von Zeichen mit einer Umrandung (Schattierung) an wählbaren Seiten der Zeichen folgende Elemente vorgesehen sind:
a) eine Steueranordnung (10), die für jede darzustellende Rasterzeile eines Zeichens zusätzlich die Informationen einer der Umrandungsbreite entsprechenden ersten Anzahl vorhergehender und/oder folgender Rasterzeilen des Zeichens gemäß den gewählten Seiten für die Umrandung aus der Datenquelle (12) ausliest,
b) eine Verknüpfungsanordnung (16; 42, 44), die die Informationen gleicher Spalten der einzelnen ausgelesenen Rasterzeilen des Zeichens zu einem Zeilensignal verknüpft, wobei die erste Verzögerungsanordnung (52, 54, 56, 58) das Zeilensignal bis zu einer doppelten zweiten, der Umrandungsbreite entsprechenden Anzahl Spalten verzögert und spaltenweise verzögert abgibt und die Kombinieranordnung (61 bis 67) die spaltenweise verzögerten Zeilensignale entsprechend den gewählten Seiten der Umrandung kombiniert,
c) eine zweite Verzögerungsanordnung (22), die die Informationen der momentan darzustellenden Rasterzeile um die zweite Anzahl Spalten verzögert als Zeichensignal abgibt,
d) eine Ausblendanordnung (72, 74), die die kombinierten verzögerten Zeilensignale bei Auftreten eines Zeichensignals unterdrückt und das nicht unterdrückte Signal als Schattierungssignal der Darstellungsanordnung (28) zur Erzeugung einer vorgebbaren Farbe an den entsprechenden Rasterpunkten zuführt.

4. Darstellungsanordnung nach Anspruch 3,
**dadurch gekennzeichnet**, daß zum Darstellen der Umrandung mit wählbarer Breite die erste Anzahl der gewählten Umrandungsbreite und die zweite Anzahl der maximalen Umrandungsbreite entspricht und daß die Kombinieranordnung (61 bis 67) gemäß der gewählten Umrandungsbreite ausgewählte spaltenweise verzögerte Zeilensignale kombiniert.

5. Darstellungsanordnung nach Anspruch 3 oder 4, wobei die Datenquelle für jede Rasterzeile Informationen für eine dritte Anzahl zusammenhängender Rasterspalten parallel abgibt,
**dadurch gekennzeichnet**, daß die Verknüpfungsanordnung (16) die dritte Anzahl Speicherregister (44) mit je einem vorgeschalteten ODER-Gatter (42) enthält, wobei ein erster Eingang jedes ODER-Gatters mit dem Ausgang des zugehörigen Speicherregisters und ein zweiter Ausgang jedes ODER-Gatters mit einem Eingang (13) für eine der parallelen Informationen der Rasterspalten gekoppelt ist, und daß die Ausgänge (45) der Speicherregister mit einem Parallel-Serien-Wandler (18) verbunden sind, dessen Serienausgang (19) mit der zweiten Verzögerungsanordnung (52, 54, 56, 58) verbunden ist.

6. Schaltungsanordnung für eine Darstellungsanordnung nach Anspruch 3, 4 oder 5, wobei die Schaltungsanordnung die Steueranordnung, die Verknüpfungsanordnung, die erste und zweite Verzögerungsanordnung, die Kombinieranordnung und die Ausblendanordnung enthält.

## Claims

1. A method of displaying characters with a contour on a display device as a raster consisting of raster lines and raster columns, the character information being derived from a memory, signals derived therefrom being delayed column by column and the delayed signals being combined with one another in order to form a contour signal which is superposed on the information representing the character to be displayed, characterized in that in order to generate the contour, i.e. shading, at selectable sides of the character, a line signal is formed in synchronism with the raster points displayed in that, for each raster line to be displayed, the information of this raster line is combined, separately column by column, with the information of a first number of preceding and/or succeeding raster lines of the character, in conformity with the selected sides of the contour, that the line signal is delayed column by column by up to a double second number of columns, the first number denoting the height of the contour in raster lines and the second number denoting the width of the contour in raster columns that there is also formed a character signal in that the information of the raster line of the character to be displayed is delayed by the second number of columns, and that a shading signal is formed from the combination of differently delayed line signals in conformity with the sides selected for the contour, the character signal from this combination being suppressed and a selectable color being generated by the shading signal at corresponding raster points of the raster line displayed.

2. A method as claimed in Claim 1, characterized in that for selection of different contour widths, the first number corresponds to the selected contour width and the second number corresponds to the maximum contour width, and that the central delayed line signals are combined in conformity with the selected contour width and the side selected for the contour in order to form the shading signal.

3. A display device for carrying out the method of Claim 1 or 2 for controlling the display of characters in a raster consisting of raster lines and raster columns, comprising a data source for supplying the character information in synchronism with the raster points displayed, a first delay device for delaying signals derived from the character information supplied, and a combination device for combining differently delayed signals, characterized in that the following elements are provided fro the display of characters with a contour (shading) at selectable character sides:
a) a control device (10) which reads from the data source (12), for each raster line of a character to be displayed, additionally the information of a first number of preceding and/or succeeding raster lines of the character, corresponding to the contour width, in conformity with the sides selected for the contour,
b) a combinatory device (16; 42, 44) which combines the information of the same columns of the individually read raster lines of the character so as to form a line signal, the first delay device (52, 54, 56, 58) delaying the line signal up to a second, double number of columns which corresponds to the contour width, and outputs this signal delayed column by column, the combination device (61 to 67) combining the column-wise delayed line signals in conformity with the selected sides of the contour,
c) a second delay device (22) which outputs the information of the instantaneous raster line to be displayed as a character signal delayed by the second number of columns,
d) a suppression device (72, 74) which suppressed the combined, delayed line signals upon appearance of a character signal and applies the non-suppressed signal as a shading signal to the display device (28) in order to produce a selectable color at the relevant raster points.

4. A display device as claimed in Claim 3, characterized in that for the display of the contour with a selectable width, the first number corresponds to the selected contour width and the second number corresponds to the maximum contour width, the combination device (61 to 67) combining column-wise delayed line signals selected in conformity with the selected contour width.

5. A display device as claimed in Claim 3 or 4, in which for each raster line the data source outputs information for a third number of coherent raster columns in parallel, characterized in that the combinatory device (16) comprises the third number of storage registers (44), each of which is preceded by a respective OR-gate (42), a first input of each OR-gate being connected to the output of the associated storage register and a second output of each OR-gate being connected to an input (13) for respective parallel information of the raster columns, the outputs (45) of the storage registers being connected to a parallel-series converter (18) whose serial output (19) is connected to the second delay device (52, 54, 56, 58).

6. A circuit arrangement for a display device as claimed in Claim 3, 4 or 5, which circuit arrangement comprises the control device, the combinatory device, the first and the second delay device, the combination device and the suppression device.

## Revendications

1. Procédé de représentation de caractères avec un contour sur un dispositif de représentation comme une trame de lignes de trame et de colonnes de trame, les informations des caractères étant prélevées d'une mémoire et les signaux qui en sont dérivés étant retardés par colonne et les signaux retardés étant combinés l'un à l'autre pour la formation d'un signal de contour auquel est superposée une information représentant le caractère à représenter, caractérisé en ce que, pour la production du contour (ombrage) sur des côtés à sélectionner du caractère, un signal de ligne est formé de manière synchrone avec les points de trame représentés, puisque, pour chaque ligne de trame à représenter, les informations de cette ligne de trame sont reliées séparément par colonne avec les informations d'un premier nombre de lignes de trame du caractère amenées essentiellement de manière simultanée et précédentes et/ou consécutives selon les côtés sélectionnés du contour de telle sorte que le signal de ligne soit retardé d'un deuxième nombre de colonnes pouvant atteindre le double, le premier nombre indiquant la hauteur du contour dans les lignes de trame et le deuxième nombre la largeur du contour dans les colonnes de trame de telle sorte qu'un signal de caractère soit par ailleurs formé puisque les informations de la ligne de trame à représenter du caractère sont retardées du deuxième nombre de colonnes et qu'un signal d'ombrage est formé à partir de la combinaison de signaux de ligne retardés différemment en fonction des côtés sélectionnés pour le contour, le signal de caractère étant déclenché et formé à partir de cette combinaison et une couleur à prédéterminer étant produite par le signal d'ombrage à hauteur des points de trame correspondants de la ligne de trame représentée.

2. Procédé selon la revendication 1, caractérisé en ce que, pour la sélection de largeurs différentes du contour, le premier nombre de la largeur de contour sélectionnée et le deuxième nombre de la largeur maximale du contour correspondent et que les signaux de ligne retardés centraux sont combinés en fonction de la largeur de contour sélectionnée et du côté sélectionné pour le contour en vue de la formation du signal d'ombrage.

3. Dispositif de représentation en vue de la mise en oeuvre du procédé selon l'invention pour la commande de la représentation des caractères dans une trame composée de lignes de trame et de colonnes de trame avec une source de données en vue de fournir l'information des caractères de manière synchrone avec les points de trame représentés, avec un premier dispositif retardateur en vue de retarder les signaux dérivés de l'information de caractère fournie et avec un dispositif de combinaison afin de combiner des signaux retardés différemment, **caractérisé en ce** que, pour la représentation de caractères avec un contour (ombrage) sur des côtés à sélectionner, les éléments suivants sont prévus :
a) un dispositif de commande (10) qui lit en plus, pour chaque ligne de trame d'un caractère à représenter, les informations d'un premier nombre correspondant à la largeur du contour de lignes de trame précédentes et/ou consécutives du caractère, en fonction des côtés sélectionnés pour le contour à partir de la source de données (12),
b) un dispositif de liaison (16; 42, 44) qui relie les informations des mêmes colonnes des lignes de trames lues individuellement du caractère en un signal de ligne, le premier dispositif retardateur (52, 54, 56, 58) retardant le signal de ligne jusqu'à un deuxième nombre double de colonnes correspondant à la largeur de contour et le délivrant avec un retard en colonne et le dispositif de combinaison (61 à 67) combinant les signaux de ligne retardés par colonnes en fonction des côtés sélectionnés du contour,
c) un deuxième dispositif retardateur (22) qui émet les informations de la ligne de trame à représenter instantanément comme signal de caractère avec un retard du deuxième nombre de colonnes,
d) un dispositif de déclenchement (72, 74) qui supprime les signaux de lignes retardés et combinés en cas d'incidence d'un signal de caractère et amène le signal non supprimé comme signal d'ombrage du dispositif de représentation (28) pour générer une couleur prédéterminée sur les points de trame correspondants.

4. Dispositif de représentation selon la revendication 3, caractérisé en ce que, pour la représentation du contour d'une largeur à sélectionner, le premier nombre de la largeur de contour sélectionnée et le deuxième nombre de la largeur de contour maximale correspondent et que le dispositif de combinaison (61 à 67) combine les signaux de ligne retardés par colonne et sélectionnés en fonction de la largeur de contour souhaitée.

5. Dispositif de représentation selon la revendication 3 ou 4, la source de données pour chaque ligne de trame délivrant parallèlement des informations pour un troisième nombre de colonnes de trame cohérentes,
caractérisé en ce que le dispositif de liaison (16) contient le troisième nombre de registres de mémoire (44) avec respectivement une porte OU (42) montée en amont, une première entrée de chaque porte OU étant couplée à la sortie du registre de mémoire correspondant et une deuxième sortie de chaque porte OU à une entrée (13) pour l'une des informations parallèles des colonnes de trame et en ce que les sorties (45) des registres de mémoire sont reliées à un transformateur parallèle/série (18) dont la sortie série (19) est reliée au deuxième dispositif retardateur (52, 54, 56, 58).

6. Circuit pour un dispositif de représentation selon la revendication 3, 4 ou 5, le circuit contenant le dispositif de commande, le dispositif de liaison, les premier et deuxième dispositifs retardateurs, le dispositif de combinaison et le dispositif de déclenchement.
